# EUROPEAN PATENT APPLICATION

(11) **EP 1 515 274 A1**
(43) Date of publication of application: **16.03.2005**
(21) Application number: 03015310.0
(22) Date of filing: 07.07.2003
(51) Int. Cl.: G06T 5/40

(54) **Method and apparatus for obtaining histograms from an image**

(71) Applicant: Sony International (Europe) GmbH, 10785 Berlin (DE)
(72) Inventor: Lei, Zhichun, c/o Stuttgart Technology Center, 70327 Stuttgart (DE); Dilly, Altfried, c/o Stuttgart Technology Center, 70327 Stuttgart (DE); Wagner, Peter, c/o Stuttgart Technology Center, 70327 Stuttgart (DE)
(74) Representative: Müller - Hoffmann & Partner

(57) **Abstract**

The present invention relates to a method for obtaining histograms from an image as well as to a corresponding apparatus and computer program product, in particular wherein the image is dissected into blocks and, for each block, a histogram calculated for the respective block is mixed with at least one or more previously calculated histograms, each of which is associated with a respective, adjacent block.

## Description

### BACKGROUND OF THE INVENTION

### Field of the invention

The present invention relates to a method for obtaining histograms from an image as well as to a corresponding apparatus and computer program product, in particular wherein the image is dissected into blocks and, for each block, a histogram calculated for the respective block is mixed with at least one or more previously calculated histograms, each of which is associated with a respective, adjacent block.

### Description of the related prior art

Histogram equalization is widely used for image contrast enhancement. In principle, histogram equalization can be divided into two categories: global and local approach.

For global histogram equalization, only one histogram is required and it is calculated from a whole image or from a ROI (Region Of Interest) of a whole image. Due to its simplicity, global histogram equalization has been widely investigated and has found wide applications. In the past, global histogram equalization was preferred due to its low computational load. However, global histogram equalization cannot adapt to the local features of an image. Because most images are not uniform, the performance of global histogram equalization is far from satisfactory. Thus, there is a strong tendency to apply local histogram equalization to enhance image contrast. This tendency has been particularly sped up by the increasing computation power of computers and signal processors as well as by the rapid development of semiconductor technologies.

Local histogram equalization, which is also called adaptive histogram equalization, requires more than one histograms and each histogram is built from one area (block) of an image. Compared to global histogram equalization, local histogram equalization imparts a much higher computational load because, for each block, the local histogram equalization technique encompasses histogram building, histogram processing, cumulation function generation, mapping function computation and a mapping operation. However, local histogram equalization is able to adapt to local features of the image so as to yield better performance than global histogram equalization.

Since the histograms are calculated blockwise, images processed by local histogram equalization generally suffer from blocking artifacts. To alleviate this problem, an overlapping of adjacent blocks has been employed. The larger the degree of overlapping, the less visible the blocking artifacts, albeit at the cost of increased computational load. To reduce the computational load, the degree of overlapping should be reduced. To nonetheless avoid blocking artifacts, William K. Pratt, "Digital Image Processing", John Wiley & Sons, 1991, ISBN 0-471-85766-1 suggests a mapping curve interpolated from the mapping curves calculated from the block in question its adjacent top, bottom, left and right blocks.

Joung-Youn Kim, Lee-Sup Kim, and Seung-Ho Hwang, "An Advanced Contrast Enhancement Using Partially Overlapped Sub-Block Histogram Equalization", IEEE Trans. on Circuits and Systems for Video Technology, Vol. 11, No. 4, pp. 475-483, April 2000 proposed a partially overlapped sub-blocking histogram-equalization method (POSHE). The weighted sum of neighboring sub-blocks' histograms is used to generate the transformation function for the current sub-block. This summing can be realized by a 3x3 mask, which resembles a two-dimensional low pass filter.

In addition to the adjacent block overlapping and the mapping curve interpolation methods, other methods have also been applied to adaptive histogram equalization. One method proposed by J.M. Gauch, "Investigations of Image Contrast Space Defined by Variations on Histogram Equalization", CVGIP: Graphical Models and Image Processing, Vol. 54, pp. 269-280, July 1992 involves blurring the local histogram before evaluating the mapping, e.g. a Gaussian blurring. J.A. Stark, W.J. Fitzgerald, "Model-based Adaptive Histogram Equalization", Signal Processing (ELSEVIER), Vol. 37, pp. 193-200, 1994 and J.A. Stark, "Adaptive Image Contrast Enhancement Using Generalizations of Histogram Equalization", IEEE Trans. on Image Processing, Vol. 9, No. 5, pp. 889-896, May 2000 generalize this local histogram blurring method by directly specifying alternative cumulation functions. However, these kinds of methods aim more at obtaining a range of effects between full equalization and leaving an image unchanged than at reducing blocking artifact.

Because adaptive histogram equalization only uses local histogram information regardless of the global histogram information, the resulting images can be distorted. For instance, local histogram equalization can make the background as clear as the target object on an image. The emphasized background confuses the human sense of distance. To solve this problem, Kim, *loc. cit.,* proposed that the sub-block histogram should be mixed with the global histogram in a proportional ratio so that the overall image contrast loss problem can be avoided.

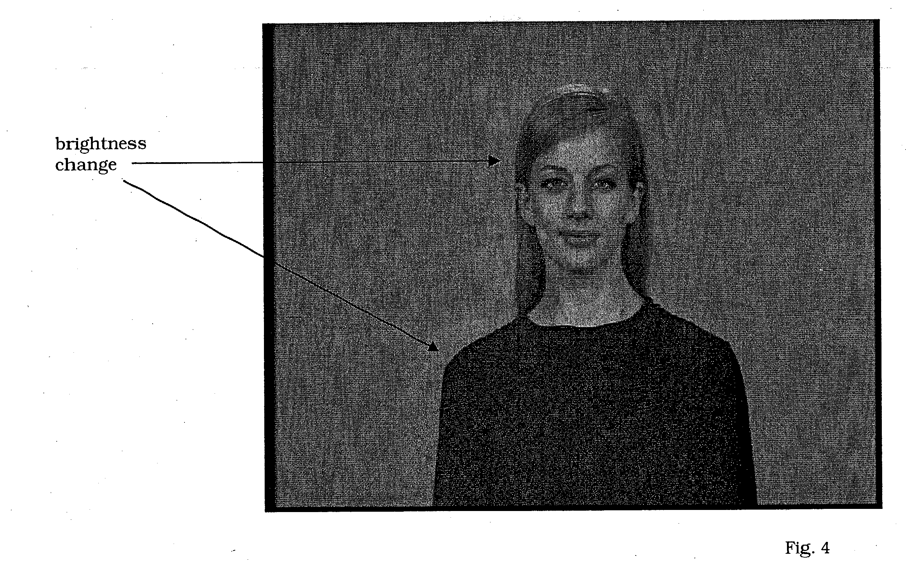

In addition to the problems of blocking artifacts and overall image contrast losses addressed, yet not adequately solved, by the aforementioned prior art, local histogram equalization is also prone to incurring brightness changes in boundary areas between dark and bright objects. Such brightness changes occur e.g. when the luminance of a localized area encompassing a large number of pixels belonging to a dark, low contrast region and a small number of lighter pixels belonging to a region requiring no or little contrast enhancement is significantly increased due to the large number of dark pixels, which results in a "halo effect" adjacent to regions that were originally dark and of low contrast. Unfortunately, such changes in brightness are generally perceived as being disturbing or unnatural. An image comprising such processing artifacts, i.e. of such changes in brightness, is reproduced as Figure 4.

European patent application 03012380.6, "Method of and Apparatus for Processing a Sequence of Images" teaches an image processing scheme, in particular employing histogram equalization, wherein an image processing parameter is smoothed via a temporally recursive filter.

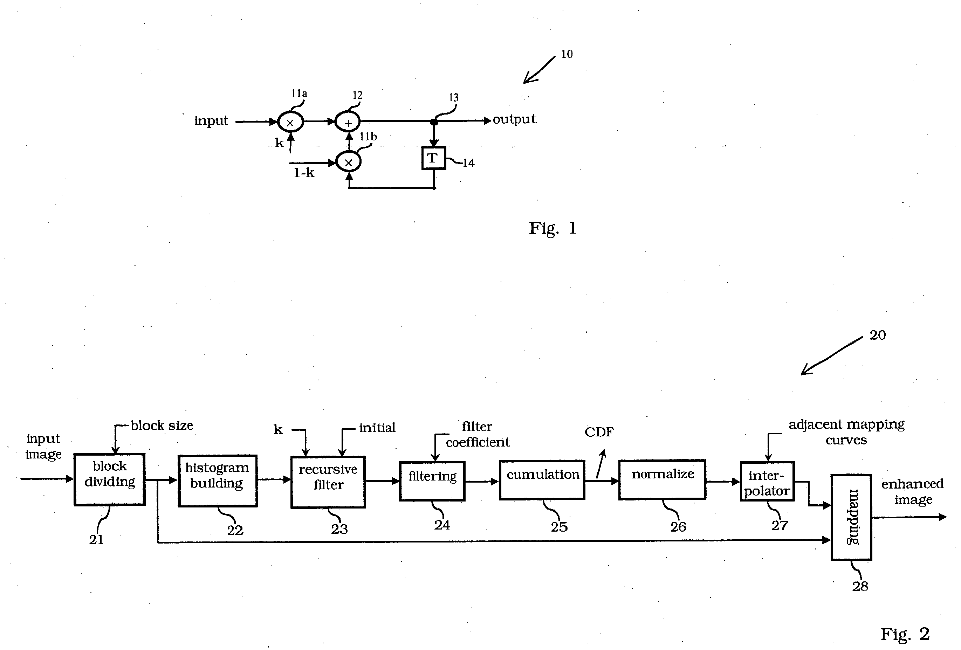

Figure 1 shows an exemplary embodiment of a recursive filter 10. The recursive filter 10 illustrated in Figure 1 is a first order temporally recursive filter and comprises two multiplying units 11a and 11b, an adding unit 12, a signal tap 13 and a signal delay 14. An input signal, for instance image data such as a histogram associated with a block to be processed, is weighted in multiplying unit 11a with a weighting factor k and passed on to the adding unit 12. The adding unit 12 adds a delayed, weighted signal to the input signal and outputs the resultant signal as an output signal. Signal tap 13 creates a feedback signal from the output signal and directs this feedback signal to the signal delay 14. The signal delay stores the feedback signal, for example in an image data memory, e.g. until image data associated with a next block is fed to the temporally recursive filter, and then outputs the delayed feedback signal to the multiplying unit 11b, where the delayed feedback signal is weighted by a weighting factor, e.g. 1-k. The resultant, delayed feedback signal is then added, in the adding unit 12 to a subsequent input signal, thus completing the feedback loop.

The output of such a filter is not only dependent on the current input signal, but also on previous input signals. Consequently, any change in the current input over previous input will be reduced, i.e. the output signal will be smoothed, in accordance with the smoothing, *i*.*e*. controlling, coefficient of the temporally recursive filter, i.e. in accordance with the ratio between weighting of the input signal and weighting of the feedback signal. In the illustrated example, the controlling coefficient k can adopt a value between 0 and 1. The lower the value of k, the stronger the smoothing effect of the temporally recursive filter.

Summarizing the above, local histogram equalization comprises dividing an image into many blocks and accordingly processing these blocks differently. Thus, images processed by local histogram equalization generally suffer from blocking artifact. To avoid this kind of blocking artifact, adjacent blocks can be closely overlapped. Obviously, however, the overlapping method is computationally very intensive. Furthermore, block overlapping alone is not enough to avoid undesirable brightness changes at boundary areas between dark and light regions and the overall image contrast loss.

The computational complexity of the adaptive histogram equalization can be reduced significantly if the blocks are not closely overlapped. Although blocking artifacts can be suppressed using the mapping curve interpolation method after Pratt, loc. cit., the problem of overall image contrast loss remains unsolved. Moreover, the inventors of the present invention have determined that later method results in an additional brightness change at boundary areas between dark and bright objects that is perceived as disturbing.

Other methods also constitute a compromise between computational load and performance. For example, the partially overlapped sub-blocking histogram-equalization method after Kim, *loc. cit.,* has a relative low computational load, but has been determined to cause visible blocking artifacts and disturbing brightness changes in boundary areas between dark and bright objects.

In view of the above, it is an object of the present invention to provide a refined method, apparatus and computer program product for obtaining histograms from an image, in particular for the sake of performing histogram equalization on the image on the basis of the obtained histograms in a manner that, in toto, exhibits moderate computational load yet without incurring blocking artifacts, unnatural brightness changes in the boundary areas between dark and bright objects or an overall loss of image contrast. It is likewise an object of the present invention that the aforementioned computational load does not exceed the acceptable limit for implementation in a consumer electronics product.

### SUMMARY OF THE INVENTION

In its broadest aspect, the invention can be seen in a method for obtaining adapted histograms from an image, wherein a histogram calculated for a respective region is mixed with at least one or more previously calculated histograms, each of which is in particular or preferably associated with a respective, adjacent region.

In its broadest aspect, the invention can also be seen in a method for obtaining histograms from an image, wherein the image is blurred by a low pass filter, connected pixels of the image are assigned to a respective one of a plurality of regions such that each pixel of the image is a member of one or more regions and a histogram is calculated for each of said regions.

The invention can likewise be seen in a corresponding apparatus or computer program product. While the present description may, for the sake of brevity, limit itself to a description of the method of the invention, the teachings of this specification are to be understood as applying equally to and encompassing a corresponding apparatus and computer program product capable of effecting the functionality of the described method.

Since the adapted histogram of a respective region is a mixture of the calculated histogram for that region and the respective histograms of one or more - in particular or preferably adjacent - regions, the adapted histogram is not solely dependent upon the characteristics of the region to which it is associated. Instead, its content will be biased, depending on the degree of mixing, in the direction of a histogram derived from the characteristics of the adjacent regions comprised in the mixture. Consequently, any local processing of a region based on its adapted histogram is less likely to exhibit marked distinctions *vis-à-vis* a likewise processed, adjacent region along their common boundary.

Moreover, the computational load incurred by the present invention can be easily scaled. A low computational load can be imposed if the calculated histogram is only mixed with the histograms of e.g. one or two adjacent regions. Similarly, e.g. if a higher computational load is acceptable in the target product, the calculated histogram can be mixed with the histograms of several or all of the adjacent regions. As noted above, in cases where the adapted histograms are or are a basis for deriving a processing parameter for a processing of the respective regions, the mixing of histograms of - in particular or preferably adjacent - regions in question is capable of inhibiting the occurrence of perceptible processing discontinuities along the respective boundary between the adjacent regions whose histograms have been mixed to obtain the respective adapted histograms.

Preferably, for every boundary between two regions, an adapted histogram is generated for at least one of the regions adjacent the boundary, wherein the adapted histogram comprises, in its mixture of histograms, the histogram calculated for the region on the other side of the boundary. In this manner, no boundary will exist for which the histogram on one side of the boundary has not been at least partially adapted to the histogram on the other side of the boundary. Thus, if the boundaries define regions of local processing, wherein the processing employs the adapted histograms as a processing parameter or for deriving a processing parameter, then the boundaries circumscribing regions of local processing may be made less perceptible.

In the context of the present invention, regions may have any connected shape. This means that every pixel that has been assigned to a region, i.e. is a member of that region, can be connected to any other member pixel of that region via a continuous line, i.e. a line that only passes through member pixels of the region.

By designating regions having a connected shape, a histogram of a region cannot be influenced by "distant" pixels of a disjunct region.

Preferably, all regions are of the same shape, or each region is chosen from a group of less than five shapes. Preferably, all regions of the same shape are of same orientation in relation to the image or are chosen from a group of less than four orientations.

The employment of only one shape or of only a few shapes for the regions simplifies implementation of, inter alia, region demarcation, histogram calculation for the regions and/or image processing of the region. In particular, algorithm / circuit complexity can be reduced, dedicated algorithms / circuits can be economically employed and memory demands can be minimized, all of which contribute to more economical implementation and speedier processing. These advantageous apply equally to implementations, wherein all regions of the same shape chosen from a group of less than four orientations, in particular the group of solely one orientation.

Since it is common in the field of image processing to arrange pixels in a rectangular matrix, it is advantageous that the regions be rectangular in shape. If applicable, the edges of the rectangular regions can be advantageously oriented along vertical and horizontal axes of the pixel matrix.

It is particularly advantageous to employ tessellatable regions, i.e. regions having a shape capable of encompassing all pixels of the image without overlap using regions of just one shape or only a few, i.e. 2-5, shapes. Preferably, all regions, especially those of the same shape, also have the same size, i.e. encompass the same or roughly the same number of pixels. Preferably shapes include triangles, quadrilaterals and hexagons, in particular isosceles triangles, regular hexagons and parallelograms.

The employment of regions having (roughly) the same size makes it more economical to implement e.g. histogram calculation and/or image processing of regions in parallel or in a regularly periodic sequence since the processing of each region requires roughly equal resources.

Depending of the arrangement of the pixels of the image and the chosen region shape(s), the edges of the chosen shape, as mathematically defined, may transect pixels of the image. Consequently, the region shapes are preferably defined as a discrete arrangement of pixels.

To more effectively counter the problem of perceptible boundary artifacts and discontinuities, it is advantageous if adjacent regions overlap slightly, i.e. overlap such that. less than 20% of the pixels of a region are also members of another region. Indeed, overlap of less than 10%, 5% or, as noted above, even no overlap can be advantageously employed.

In its broadest aspect, the present invention places no limitations on the choice of which regions overlap. Preferably, each region will only overlap adjacent regions whose histograms are to be mixed to its own histogram and/or to whose histogram its histogram is to be mixed, i.e. will only overlap adjacent regions with respect to which a unilateral or mutual mixing of histograms is to be carried out.

Assuming that processing of each region is carried out on the basis of a histogram adapted via mixing with the histogram of an overlapping, adjacent region, the processed overlap area will yield a smooth transition between the non-overlapping areas of the two regions. Consequently, assuming appropriate choice of, inter alia, region shape, region overlap, histograms to be mixed, degree of mixing and order in which the regions are image processed, a highly homogenous, processed image can be obtained.

Likewise, regions can be chosen to overlap all regions whose histograms will not be mixed to its own histogram and/or to whose histogram its histogram will not be mixed, i.e. will overlap all adjacent regions with respect to which a unilateral or mutual mixing of histograms will not be carried out. In this manner, the size of each region can be reduced or minimized, which reduces the cost of histogram calculation for and/or image processing of each region accordingly. Yet since histogram mixing is effected across all non-overlapping boundaries, an image smoothing measure is nonetheless carried out across those boundaries and boundary discontinuities are inhibited.

It can be likewise advantageous to employ or not employ region overlap in a manner deviating from the aforementioned preferences. Region overlap has a smoothing effect in that some of the pixels of one region also belong to another region. Consequently, any processing of overlapping regions based directly or indirectly on the pixel content will be "smoothed" by the common pixel content. As noted above, however, a reduction of the amount of overlap reduces the processing load. Similarly, inter-boundary histogram mixing has a smoothing effect, whereas not mixing likewise reduces the processing load. E.g. in the case of a priori knowledge with respect to the content and/or the processing behavior of an image or parts of an image (for instance an edge portion), it can be useful to exploit such knowledge when determining an appropriate choice of overlap and/or histogram mixing. That is to say, the person skilled in the art, in view of the above teachings, will readily recognize the circumstances under which it is advantageous to combine overlap and histogram mixing, the circumstances under which it is advantageous to select between overlap and histogram mixing and the circumstances under which it is advantageous to employ neither overlap nor histogram mixing to a boundary between adjacent regions.

Not only the degree, but also the shape of overlap is of relevance to the implementation of the present invention.

In its broadest aspect, the present invention places no limitations on the shape of overlap. However, starting e.g. from a plurality of tessellated "core areas," several simple schemes can be employed to specify a respective region having an advantageous area of overlap around each of these core areas. First, the boundaries of each respective core area can be expanded e.g. in two orthogonal directions such as a horizontal and a vertical image direction by a predetermined number of pixels or in accordance with a desired percentage of overlap with respect to the area of the core area. Second, in the case of linear or quasi-linear boundaries, each pixel along the original length of the boundary or along its length as defined by intersecting boundary lines of each boundary of the respective core area can be displaced outwardly, perpendicular to the respective boundary, by a predetermined distance or in accordance with a desired percentage of overlap with respect to the area of the core area. Third, the boundaries of each respective core area can be expanded in radial direction e.g. from a horizontally and vertically median point or a "center of gravity" of the region by a predetermined number of pixels or in accordance with a desired percentage of overlap with respect to the area of the core area.

As appropriate, displaced boundary pixels are rounded to the nearest pixel and gaps between displaced boundary lines are bridged by a line directly connecting the ends of neighboring, displaced boundary lines or by two lines along the respective paths travelled by the neighboring boundary lines during displacement. It should be noted that the boundary is thus displaced, not the content of the respective boundary pixels.

As noted above, overlap yields an "equalizing" between the histograms of the overlapped regions, i.e. the more the overlap, the more similar the content of their respective histograms. A mixing of the histograms of overlapping regions causes the overlapping areas to be given more weight in accordance with the degree of mixing. Consequently, both of these measures smooth, in their own way, any processing carried out to the respective regions on the basis of the thus determined (adapted) histograms and inhibit the generation of boundary discontinuities during such processing. By choosing e.g. the shape and size of any overlap appropriately in accordance with the teachings contained herein, a stronger or weaker smoothing of particular boundaries of a region can be achieved.

Preferably, the invention comprises assigning connected pixels of a image to a respective one of a plurality of regions such that each pixel of the image is a member of one or more regions, calculating a histogram for each of the regions and, for each region except zero or more regions constituting a set of first regions, obtaining an adapted histogram by mixing the histogram calculated for the respective region with one or more previously calculated histograms, each of which is associated with a respective, spatially adjacent region.

The "building" of regions by e.g. assigning pixels thereto has been discussed in detail supra. Histogram calculation based on the pixels of a region is known in the art. The mixing of histograms also poses no difficulties to the person skilled in the art. In the field of image processing, a histogram is commonly understood as (a representation of) the frequency of occurrence (or absolute number of occurrences) of pixels having a particular characteristic in the given region as a function of that characteristic. Consequently, histograms can be mixed, i.e. weighted and summed, just as any other mathematical function can be weighted and summed. As noted above, a histogram calculated for a region need not be mixed with the histograms of all spatially adjacent regions to achieve sufficient inter-regional histogram smoothing. For example, a mixing scheme wherein the histogram of each region is mixed with the histograms of the regions neighboring to the left and above will ensure that histogram smoothing takes place across all boundaries.

Depending on the mixing scheme chosen, e.g. the order and the manner in which histograms are mixed, some regions, e.g. edge regions for which no appropriate neighbor exists, may require special treatment.

Preferably, the mixing is carried out via a recursive filter, in particular a temporally recursive filter. A configuration and function of a temporally recursive filter, in particular its smoothing effect, was discussed above. The output of a temporally recursive filter depends not only on its current input, but also on previous input. Moreover, temporally more distant input is "diluted" by more recent input. A temporally recursive filter can thus be configured to depend strongly on its current input and to depend on previous input slighter and slighter the more temporally distant that input is.

In the case of histogram mixing, employment of a recursive filter together with an accordingly chosen sequence of regions, *e.g.* a sequence wherein sequential distance corresponds to spatial distance, can ensure that a region's histogram is not only mixed with those of its immediate neighbors, but also with those of more distant neighbors, albeit to a lesser degree. This provides histogram smoothing that is less dependent on local parameters and that, when used as a basis for processing, yields results more closely resembling global processing, yet without sacrificing local elements. Employment of a temporally recursive filter together with an accordingly chosen sequence of regions, e.g. a sequence wherein temporal distance corresponds to spatial distance, can likewise ensure that a region's histogram is not only mixed with those of its immediate neighbors, but also with those of more distant neighbors, albeit to a lesser degree.

Preferably, the mixing is effected at least partially sequentially. While it is generally advantageous to employ parallel processing where numerous similar or identical tasks must be carried out as swiftly as possible, the above discussion with regard to recursive filters illustrates that sequential processing can be highly advantageous, especially in combination with particular algorithms / hardware. Moreover, sequential processing simplifies implementation.

Preferably, successionally adjacent regions in a mixing sequence are spatially adjacent regions in said image. Preferably, an adapted histogram is obtained for each region excepting regions belonging to a set of first regions in said mixing sequence, by mixing the histogram calculated for the respective region with at least the histogram of the region successionally preceding said respective region in said mixing sequence.

As illustrated by the above discussion with regard to recursive filters, particular algorithms / hardware can profit from a sequence for mixing the histograms of respective regions that exhibits a sequential / temporal correspondence to the spatial relationship of the regions. It was likewise noted above that some regions, e.g. first regions in a mixing sequence, may require special treatment, i.e. may necessitate that the mixing scheme undergo some form of initialization.

Preferably, for each of said regions belonging to the set of first regions, an adapted histogram is obtained by mixing its respectively calculated histogram with a uniformly distributed histogram. The inventors have determined that a uniformly distributed histogram is a suitable surrogate in cases where an appropriate histogram from a neighboring regions is lacking.

It should be noted that the term mixing sequence, as used in this specification, generally describes an inter-regional processing sequence, wherein a single sequence step comprises one or more substantially intra-regional sub-steps of mixing the histogram of a current region with the respective histogram of one or more spatially adjacent regions. The term mixing sequence is synonymous to the term mixing order.

Optionally, the term mixing sequence may also encompass the order in which the aforementioned sub-steps are carried out. Such a mixing sequence can be advantageously combined with a recursive filter wherein the smoothing coefficient is appropriately, dynamically adapted such that the output of the recursive filter, i.e. the adapted histogram, depends strongly on the histogram of the current region, somewhat on the histograms of spatially proximate regions and just slightly on the histograms of regions more spatially distant.

Preferably, the image is blurred by a low pass filter prior to histogram calculation. A blurring of the image prior to histogram calculation provides a third, simple and effective mechanism for inter-regional smoothing. Blurring is capable of smearing characteristics of one region into an adjacent region. Consequently, basing histogram calculation on a blurred image effects a "blurring" of characteristics originally belonging to one region into the histogram of adjacent regions and vice-versa. If image processing of the adjacent regions is carried out on the basis of their respective, "blurred" histograms, the processing will be more similar than if no blurring had been carried out. The similarity between the processing of the respective regions is even stronger if the processing is carried out on the blurred image since not only a processing parameter / basis for deriving a processing parameter, i.e. their histograms, but also the processed image content, in particular the pixels near their respective boundaries, will exhibit similarities.

The present invention can be advantageously employed in a histogram equalization scheme such as that disclosed in European patent application Nr. 02 004 428.5, "Contrast Enhancement for Digital Images." In particular, the adapted or "blurred" histograms obtained by the present invention can be advantageously employed as a processing parameter or for deriving a processing parameter in a histogram equalization scheme.

### BRIEF DESCRIPTION OF THE DRAWINGS

The novel features of the invention, as well as the invention itself, both as to its structure and its operation will be best understood from the accompanying figures, taken in conjunction with the accompanying description. The Figures show:
- Fig. 1: a conventional temporal recursive filter (as an example, here only the 1^{st} order temporal recursive filter is shown);
- Fig. 2: a block diagram of a local histogram equalization scheme using recursive histogram mixing in accordance with a first preferred embodiment of the invention;
- Fig. 3: a block diagram of a local histogram equalization scheme using image blurring in accordance with a second preferred embodiment of the invention; and
- Fig. 4: an image exemplifying processing artifacts.

### DESCRIPTION OF THE PREFERRED EMBODIMENTS

Figure 2 is a block diagram of a local histogram equalization scheme 20 using recursive histogram mixing in accordance with a first preferred embodiment of the invention. The illustrated scheme comprises a block dividing unit 21, a histogram building unit 22, a recursive filter 23, a filtering unit 24, a cumulation unit 25, a normalizing unit 26, an interpolator 27 and a mapping unit 28.

As shown in Figure 2, an input image is demarcated or, as the case may be, dissected into a plurality of blocks by block dividing unit 21 in accordance with a given block size. Block dividing unit 21 feeds the image data, preferably block by block, but alternatively as a whole including block boundary information, to both histogram building unit 22 and mapping unit 28. For each block, histogram building unit 22 calculates a histogram for the respective block and passes the calculated histogram to recursive filter 23, where it is smoothed in accordance with a given smoothing coefficient k under the influence of previous input to recursive filter 23 including given initialization values. The smoothed histogram is output to filtering unit 24, where filtering, e.g. frequency domain low pass filtering, recursive low pass filtering, cascaded recursive low pass filtering, or zero-phase forward and backward low pass filtering as taught, for example, in the aforementioned European patent application Nr. 02 004 428.5, is effected in accordance with a given filter coefficient. The smoothed, filtered histogram is fed to cumulation unit 25, where a cumulative distribution function is obtained from the smoothed, filtered histogram via cumulation over the entire dynamic range of the histogram's values. Normalizing unit 26 receives the cumulative distribution function (CDF) as an input and normalizes the CDF to yield a mapping function, also called a mapping curve, that is passed to interpolator 27. As a further measure for combatting blocking artifacts, interpolator 27 generates an interpolated mapping curve by interpolating the received mapping curve of a current block with mapping curves of adjacent blocks. The interpolated mapping curve is fed, parallel to the image data from block dividing unit 21 as noted above, to mapping unit 28 where the pixels of the current block are mapped in accordance with the interpolated mapping curve to obtain an enhanced image.

In the present embodiment, the recursive filter 23 has a configuration as shown in Figure 1, wherein signal delay 14 comprises a histogram memory, and operates, individually and together with further features of the invention, as follows.

The input to the recursive filter 23 is the histogram calculated from the block in question. The output of the recursive filter 23 is the mixed histogram resultant from a mixing of the current histogram to those calculated from its previous blocks. This mixing result is to be further mixed with the histogram calculated from its next block. The mixing amount is controlled by the filter coefficient k, which is assigned a value between zero and one. The mixed histogram is further used to calculate mapping function. Finally, the pixels to be enhanced are mapped to another value. In this way, the image contrast is improved.

Due to the histogram mixing, each histogram is strongly related to other histograms. Thus, on the one hand, the histogram mixing plays a role similar to that of block overlapping, and helps reduce blocking artifacts. Correspondingly, one can decrease the block overlapping size and, in return, reduce the computational load of the local histogram equalization technique. On the other hand, this histogram mixing plays role similar to that of a mixing of local histograms and a global histogram calculated from a whole image. As result, the overall image contrast can be improved.

Thanks to the histogram mixing by means of recursive filter, disturbing brightness changes at boundary areas between dark and bright objects are kept invisible, because this mixing plays the role of making different histograms more uniform.

Summarizing the above scheme, the input image whose contrast is to be enhanced is first divided into many blocks, depending on a given block size (e.g. 128x128 pixels). From each block the histogram is built. The histogram is then blurred by recursive filter 23 controlled by the recursive filter coefficient "k". Before blurring the first histogram, recursive filter 23 has to be initialized, e.g. by a uniformly distributed histogram. The blurred histogram is further smoothed by frequency domain low pass filtering, or recursive low pass filtering (or cascaded recursive low pass filtering), or zero-phase forward and backward low pass filtering, as described, for example, in the aforementioned European patent application Nr. 02 004 428.5. The smoothed histogram is cumulated over the whole dynamic range of the input signals, and the CDF (Cumulative Distribution Function) is obtained. The CDF is normalized to the dynamic range of the input signals, e.g. from 0 to 255 in the case of 8 bits quantization, and as a result one obtains the mapping function. To avoid possible blocking artifacts, this mapping curve is interpolated with the mapping curves calculated from the adjacent blocks to the block in question. Finally, the pixels of the block in question are mapped so that the input image is enhanced. Further information regarding the details of such processing can be found e.g. in Pratt, "Digital Image Processing," cited below.

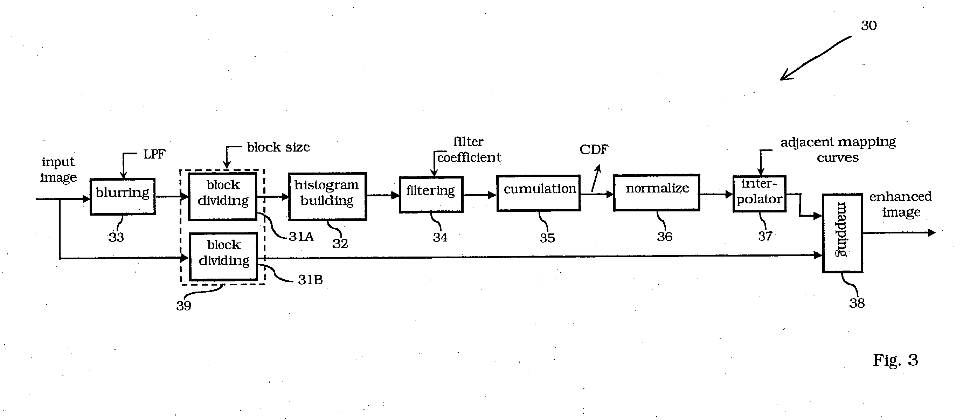

Figure 3 is a block diagram of a local histogram equalization scheme 30 using image blurring in accordance with a second preferred embodiment of the invention. The illustrated scheme comprises two block dividing units 31A and 31B, a histogram building unit 32, an image blurring unit 33, a filtering unit 34, a cumulation unit 35, a normalizing unit 36, an interpolator 37 and a mapping unit 38.

As shown in Figure 3, an input image is fed to both blurring unit 33 and block dividing unit 31B. Block dividing unit 31B, demarcates or, as the case may be, dissects the blurred image into a plurality of blocks by in accordance with a given block size and feeds the blurred and blocked image data, preferably block by block, but alternatively as a whole including block boundary information, to mapping unit 38. Blurring unit 33 blurs the image fed thereto, e.g. by means of low pass filtering on the basis of given low pass filtering coefficients (LPF). The blurred is passed on to block dividing unit 31A, where it is demarcated or, as the case may be, dissected into a plurality of blocks by in accordance with a given block size. Block dividing unit 31A feeds the blurred image data, preferably block by block, but alternatively as a whole including block boundary information, to histogram building unit 32. For each block, histogram building unit 32 calculates a histogram for the respective block and passes the calculated histogram to filtering unit 34, where filtering, e.g. frequency domain low pass filtering, recursive low pass filtering, cascaded recursive low pass filtering, or zero-phase forward and backward low pass filtering as taught, for example, in the aforementioned European patent application Nr. 02 004 428.5, is effected in accordance with a given filter coefficient. The filtered histogram is fed to cumulation unit 35, where a cumulative distribution function is obtained from the filtered histogram via cumulation over the entire dynamic range of the histogram's values. Normalizing unit 36 receives the cumulative distribution function (CDF) as an input and normalizes the CDF to yield a mapping function, also called a mapping curve, that is passed to interpolator 37. As a further measure for combatting blocking artifacts, interpolator 37 generates an interpolated mapping curve by interpolating the received mapping curve of a current block with mapping curves of adjacent blocks. The interpolated mapping curve is fed, parallel to the blurred and blocked image data from block dividing unit 31B as noted above, to mapping unit 28 where the pixels of the current block are mapped in accordance with the interpolated mapping curve to obtain an enhanced image.

Thus, in accordance with the second embodiment of the invention, the original input image is at first blurred by a low pass filter (LPF) before it is used to calculate mapping function. In this way, the image will be made much more uniform than the original one. As result, the problem of blocking artifacts can be alleviated. Thus, the block overlapping size can be reduced so that the computational load of the local histogram equalization can be reduced. For the same reason, disturbing brightness changes at boundary areas between dark and bright objects can be avoided. Overall image contrast enhancement can also be achieved.

The primary difference between the first and second embodiments is that the second embodiment does not require a recursive filter and that, instead, image blurring, e.g. by a low pass filter, is employed.

The above first and second embodiments aim at preventing disturbances from being caused and at keeping computational load moderate. Still better performance can be achieved by combining the features of the two embodiments accordingly.

Further information with regard to the terminology used in this specification as well as techniques and hardware employable for implementing the known features of the invention can be found in the documents cited in the bibliography at the end of this specification, the contents of which are incorporated herein by reference.

While the preferred and alternative embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely indicative of a preference and is not to be interpreted as limiting. Except where the contrary is explicitly noted, the plural may be replaced by the singular and vice-versa.

### BIBLIOGRAPHY

William K. Pratt, "Digital Image Processing", John Wiley & Sons, 1991, ISBN 0-471-85766-1
J.M. Gauch, "Investigations of Image Contrast Space Defined by Variations on Histogram Equalization", CVGIP: Graphical Models and Image Processing, Vol. 54, pp. 269-280, July 1992
J.A. Stark, W.J. Fitzgerald, "Model-based Adaptive Histogram Equalization", Signal Processing (ELSEVIER), Vol. 37, pp. 193-200, 1994
Joung-Youn Kim, Lee-Sup Kim, and Seung-Ho Hwang, "An Advanced Contrast Enhancement Using Partially Overlapped Sub-Block Histogram Equalization", IEEE Trans. on Circuits and Systems for Video Technology, Vol. 11, No. 4, pp. 475-483, April 2000
J.A. Stark, "Adaptive Image Contrast Enhancement Using Generalizations of Histogram Equalization", IEEE Trans. on Image Processing, Vol. 9, No. 5, pp. 889-896, May 2000
European patent application Nr. 02 004 428.5, "Contrast Enhancement for Digital Images"

### LIST OF REFERENCE SIGNS

- 10: recursive filter
- 11a: multiplying unit
- 11b: multiplying unit
- 12: adding unit
- 13: signal tap
- 14: signal delay
- 20: local histogram equalization scheme
- 21: block dividing unit
- 22: histogram building unit
- 23: recursive filter
- 24: filtering unit
- 25: cumulation unit
- 26: normalizing unit
- 27: interpolator
- 28: mapping unit
- 30: local histogram equalization scheme
- 31A: block dividing unit
- 31B: block dividing unit
- 32: histogram building unit
- 33: image blurring unit
- 34: filtering unit
- 35: cumulation unit
- 36: normalizing unit
- 37: interpolator
- 38: mapping unit

## Claims

1. Method for obtaining histograms from an image, comprising the steps of:
- assigning connected pixels of said image to a respective one of a plurality of regions such that each pixel of said image is a member of one or more regions;
- calculating a histogram for each of said regions; and
- or each region except zero or more regions constituting a set of first regions, obtaining an adapted histogram by mixing the histogram calculated for the respective region with one or more previously calculated histograms, each of which is in particular or preferably associated with a respective, spatially adjacent region.

2. Method according to claim 1,
wherein said mixing is carried out via a recursive filter.

3. Method according to any one of the claims 1 or 2,
wherein:
- said mixing is effected at least partially sequentially,
- successionally adjacent regions in a mixing sequence are spatially adjacent regions in said image, and
- for each region excepting regions belonging to said set of first regions in said mixing sequence, obtaining an adapted histogram by mixing the histogram calculated for the respective region with at least the histogram of the region successionally preceding said respective region in said mixing sequence.

4. Method according to claim 3,
wherein, for each of said regions belonging to said set of first regions, an adapted histogram is obtained by mixing its respectively calculated histogram with a uniformly distributed histogram.

5. Method according to any one of the preceding claims,
wherein said image is blurred by a low pass filter (33) prior to said histogram calculation.

6. Method for obtaining histograms from an image,
comprising the steps of:
- blurring said image by a low pass filter (33);
- assigning connected pixels of said image to a respective one of a plurality of regions such that each pixel of said image is a member of one or more regions;
- calculating a histogram for each of said regions.

7. Apparatus (20) for obtaining histograms from an image, comprising:
- region building means (21) configured and adapted for assigning connected pixels of said image to a respective one of a plurality of regions such that each pixel of said image is a member of one or more regions;
- histogram calculating means (22) configured and adapted for calculating a histogram for each of said regions; and
- mixing means (23) configured and adapted obtaining an adapted histogram by mixing, for each region except zero or more regions constituting a set of first regions, the histogram calculated for the respective region with one or more previously calculated histograms, each of which is associated with a respective, spatially adjacent region.

8. Apparatus according claim 7,
wherein said mixing means comprises a recursive filter (23).

9. Apparatus according to any one of the claims 7 or 8,
wherein said calculating means is configured and adapted for effecting said mixing at least partially sequentially such that successionally adjacent regions in a mixing sequence are spatially adjacent regions in said image, and obtaining, for each region excepting regions belonging to said set of first regions in said mixing sequence, an adapted histogram by mixing the histogram calculated for the respective region with at least the histogram of the region successionally preceding said respective region in said mixing sequence.

10. Apparatus according to claim 9,
wherein said calculating means is configured and adapted for obtaining an adapted histogram for each of said regions belonging to said set of first regions by mixing its respectively calculated histogram with a uniformly distributed histogram

11. Apparatus according to any one of the claims 7 to 10,
comprising low pass filter means (33) configured and adapted for blurring said image prior to said histogram calculation.

12. Apparatus (30) for obtaining histograms from an image, comprising:
- low pass filter means (33) configured and adapted for blurring said image;
- region building means (31A, 31B) configured and adapted for assigning connected pixels of said image to a respective one of a plurality of regions such that each pixel of said image is a member of one or more regions;
- histogram calculating means (32) configured and adapted for calculating a histogram for each of said regions.

13. Computer program product for obtaining histograms from an image, comprising computer program means for carrying out the steps of the method according to any one of the claims 1 to 6 when executed on a computer, digital signal processor or the like.

14. Computer readable storage medium comprising the computer program product according to claim 13.
